# DEMANDE DE BREVET EUROPEEN

(11) **EP 2 957 971 A1**
(43) Date de publication de la demande: **23.12.2015**
(21) Numéro de dépôt: 15172089.3
(22) Date de dépôt: 15.06.2015
(51) Int. Cl.: G05B 19/401, B23B 13/02

(54) **SYSTÈME D'USINAGE ET PROCÉDÉ ASSOCIÉ**

(30) Priorité: 16.06.2014 FR 1455474
(71) Demandeur: Centre Technique des Industries Mécaniques et du Décolletage, 74300 Cluses (FR)
(72) Inventeur: Laurent, Patrice, 74250 Viuz en Sallaz (FR); Busi, Roger, 74800 SAINT LAURENT (FR); Pollet-Villard, Aurélien, 74440 TANINGES (FR); Jayr, Cyril, 74800 Saint Sixt (FR)
(74) Mandataire: Croonenbroek, Thomas Jakob

(57) **Abrégé**

L'invention concerne un système d'usinage (1) comprenant
- une unité (3) d'alimentation en matière première sous forme de barres (5) de matière,
- une machine-outil (7) à commande numérique alimenté en barres (5) de matière à usiner par l'unité d'alimentation en matière première, caractérisé en ce qu'il comprend une unité (11) de discrimination de la matière des barres (5) convoyées de l'unité d'alimentation (3) vers la machine-outil (7) à commande numérique.

## Description

La présente invention se situe dans le domaine de l'usinage et plus particulièrement dans le domaine de l'usinage automatique en série et du décolletage.

Plus spécifiquement, l'invention s'applique de façon générale à toute sorte d'installations d'usinage comprenant une machine - outil à commande numérique et une unité d'alimentation en matière première comme par exemple un embarreur, un robot, bras manipulateur ou tout autre système destiné à alimenter en matière à usiner la machine-outil.

La machine-outil peut être configurée pour l'usinage de tout matériau par enlèvement de matière : le tournage, le perçage, le fraisage, le décolletage, le fonçage, le chariotage.

Dans l'objectif de réduire les coûts de fabrication, on fait fonctionner des systèmes d'usinage de façon de plus en plus autonome, voir même sans opérateur présent sur les lieux d'usinage.

A cet effet, un embarreur avec un magasin de barres de matière également appelé lopins de matière est installé en amont de la machine-outil de façon à alimenter celle-ci en continue avec des barres de matière à usiner.

Toutefois, pour obtenir, notamment pour une grande série de pièces à fabriquer, un résultat d'usinage équivalent du début à la fin de la production, pour un lot par exemple, il est nécessaire que les barres à usiner présentent des caractéristiques matières identiques.

Or, lors d'une livraison, il se peut qu'à cause d'une apparence externe indifférenciable ou par inadvertance, des barres de nuances différentes (par exemple INOX 303 et 304), de matière différente (par exemple un inox et un acier faiblement allié) ou de classe de matière différentes (acier et aluminium) soient chargées dans le magasin de l'embarreur sans que l'opérateur s'en aperçoive, ce qui peut avoir pour conséquence des pièces non conforme en sortie de production et donc une perte sèche pour le décolleteur.

Cette perte sèche est une perte matière dans la mesure où une barre est usinée alors qu'elle ne le devrait pas. C'est aussi une perte de temps qui ralentit la production dans son ensemble. De plus, il se peut que la matière non conforme présente des caractéristiques qui ne sont pas adaptées pour les outils de la machine-outil, entraînant ainsi soit une usure prématurée des outils, soit une casse prématurée des outils.

La présente invention vise à pallier au moins partiellement aux inconvénients précités, en proposant un système d'usinage amélioré.

Ainsi, l'invention a pour objet un système d'usinage comprenant :
- une unité d'alimentation en matière première sous forme de barres de matière,
- une machine-outil à commande numérique alimenté en barres de matière à usiner par l'unité d'alimentation en matière première, caractérisé en ce qu'il comprend une unité de discrimination de la matière des barres convoyées de l'unité d'alimentation vers la machine-outil à commande numérique.

L'invention permet une plus grande autonomie dans l'usinage automatique tout en préservant la qualité requise et sans perte inutile de matière.

Le système d'usinage selon l'invention peut en outre présenter un ou plusieurs des aspects suivants, pris seul ou en combinaison.

Selon un aspect, l'unité de discrimination est reliée à la machine-outil à commande numérique et configurée pour signaler une non-conformité dans les caractéristiques matières des barres à usiner.

Selon un autre aspect la machine-outil à commande numérique est configurée pour arrêter la production en cas d'une barre présentant des caractéristiques matières non conformes.

La machine-outil à commande numérique est par exemple configurée pour éliminer une barre de la production en cas d'une barre présentant des caractéristiques matières non conformes.

L'unité de discrimination comprend par exemple un capteur sans contact, tel qu'un capteur à courant de Foucault.

Le capteur à courant de Foucault peut comprendre un anneau réalisé en matière plastique présentant un faible coefficient de friction, notamment en polytétrafluoroéthylène (PTFE), destiné à être traversé par une barre à usiner, et une bobine enroulée autour dudit anneau.

Le capteur à courant de Foucault est configuré pour déterminer la résistivité ou l'impédance des barres à usiner.

L'unité d'alimentation comprend par exemple un embarreur, un robot ou un bras manipulateur.

L'invention concerne également un procédé d'usinage pour un système d'usinage tel que défini ci-dessus dans lequel on détecte via une unité de discrimination de la matière des barres convoyées par l'unité d'alimentation en matière première vers la machine-outil à commande numérique une non-conformité dans les caractéristiques matière des barres à usiner et on commande la machine-outil à commande numérique pour arrêter le processus d'usinage ou pour éliminer du processus d'usinage la barre non conforme.

D'autres avantages et caractéristiques apparaîtront à la lecture de la description de l'invention, ainsi que des dessins annexés sur lesquels :
- la figure 1 montre un schéma en simplifié en perspective d'un système d'usinage selon l'invention,
- la figure 2 montre un schéma synoptique du système d'usinage de la figure 1,
- la figure 3 montre une vue agrandie du système d'usinage en sortie de l'embarreur,
- la figure 4 montre une vue schématique en coupe éclatée d'un capteur sans contact du système d'usinage selon l'invention, et
- la figure 5 est un organigramme d'un procédé d'usinage selon l'invention.

Sur les figures, les éléments identiques sont identifiés par les mêmes références.

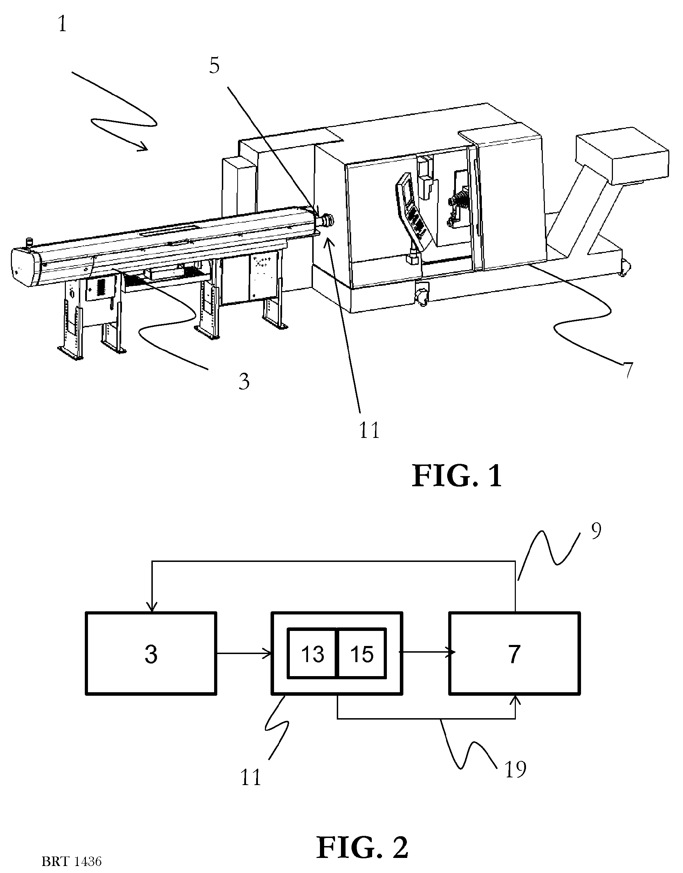

On a représenté sur les figures 1 et 2 un système d'usinage 1 selon l'invention.

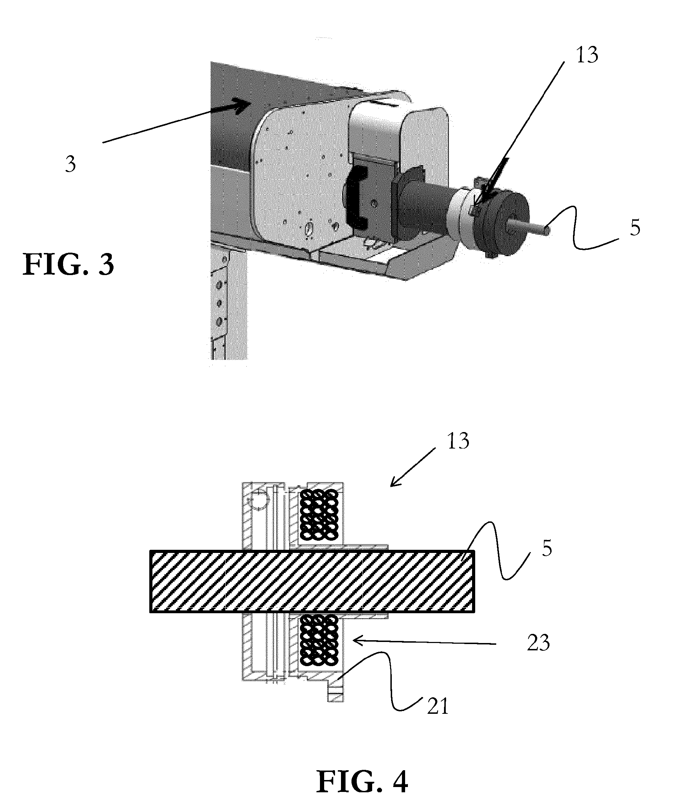

Ce système d'usinage 1 comprend d'une part une unité 3 d'alimentation en matière première tel qu'un embarreur de convoyage de la matière à usiner sous forme de barres 5 métalliques ou de lopins (voir aussi figure 3), un robot ou un bras manipulateur et d'autre part une machine-outil 7 à commande numérique alimentée en barres de matière à usiner par l'embarreur 3.

La machine-outil 7 à commande numérique comprend une ligne de commande 9 de l'embarreur 3 afin de commander celui-ci pour être alimenté, par exemple en continue, en barres 5 de matière à usiner.

De plus, le système d'usinage comprend une unité 11 de discrimination de la matière des barres convoyées par l'embarreur 3 vers la machine -outil à commande numérique 7.

Cette unité 11 est interposée entre l'embarreur 3 et la machine-outil 7 et comprend par exemple un capteur 13 sans contact et une unité de traitement 15. L'unité de traitement 15 est par exemple réalisée sous forme d'un ordinateur ou d'une carte avec un processeur et des mémoires.

L'unité de traitement 15 comporte une sortie de commande qui est reliée à une entrée associée de la machine-outil 7 via une ligne 19 de commande.

Ainsi, l'unité de discrimination 11 est reliée à la machine-outil 7 à commande numérique et configurée pour signaler la conformité et/ou la non-conformité dans les caractéristiques matières des barres à usiner.

Le capteur 13 sans contact est par exemple réalisé sous la forme d'un capteur à courant de Foucault et est configuré pour déterminer sans contact l'impédance ou la résistivité des barres à usiner.

A partir de la résistivité ou de l'impédance, on peut déterminer non seulement les classes de matières, des matières, mais également des nuances de matière.

Pour ce faire, l'unité de traitement 15 comprend par exemple une base de données contenant des valeurs de résistivité pour différentes nuances, matières et classes de matières.

Cette base de données peut aussi être enrichie par un processus d'apprentissage dans le cas où il faut usiner une barre de matière qui ne figure pas dans la base de données.

En début d'usinage d'un lot de barres de matière chargées dans l'embarreur 3, on choisit d'abord dans la base de données la résistivité correspondante avec une précision permettant de distinguer la matière jusqu'à la nuance.

Puis, chaque barre 5 passe dans le champ de détection du capteur 13 sans contact de sorte que l'unité 11 puisse mesurer la résistivité de la barre avant son usinage et comparer cette résistivité avec celle en mémoire de l'unité de traitement 15.

Si la résistivité mesurée correspond dans une plage de tolérance prédéfinie à celle en mémoire de l'unité de traitement 11, alors la barre 5 de matière est conforme et peut être usinée par la machine-outil 7 à commande numérique. La conformité de la matière de la barre peut être signalée via la ligne de commande 19 à la machine-outil à commande numérique 7.

Si la résistivité mesurée est en dehors de la plage de tolérance prédéfinie, alors, la barre 5 est réalisée en une matière non conforme, ce que l'unité de traitement 15 signale via la ligne de commande 19.

A réception d'un signal de non-conformité, la machine-outil 7 est par exemple configurée pour arrêter la production. Dans ce cas l'intervention d'un opérateur peut être requise.

En variante, la machine-outil 7 à commande numérique est configurée pour éliminer la barre non conforme avant usinage. Par élimination, on comprend que la barre 5 est par exemple stocké dans un magasin spécifique aussi appelé « prison » de la machine-outil 7 à commande numérique.

Ceci présente l'avantage que la production n'est pas interrompue et que la barre est par exemple conservée en état pour permettre son usinage ultérieur pour un autre produit par exemple.

Comme on le voit sur la figure 4, le capteur 13 à courant de Foucault comprend un anneau ou une bague 21 réalisé en matière plastique présentant un faible coefficient de friction, notamment en polytétrafluoroéthylène (PTFE) destiné à être traversé par une barre 5 à usiner, et une bobine 23 enroulée autour dudit anneau 21.

Ainsi, la barre de matière à usiner 5 glisse dans l'anneau 21 et est entourée de plus près par la bobine de mesure 23.

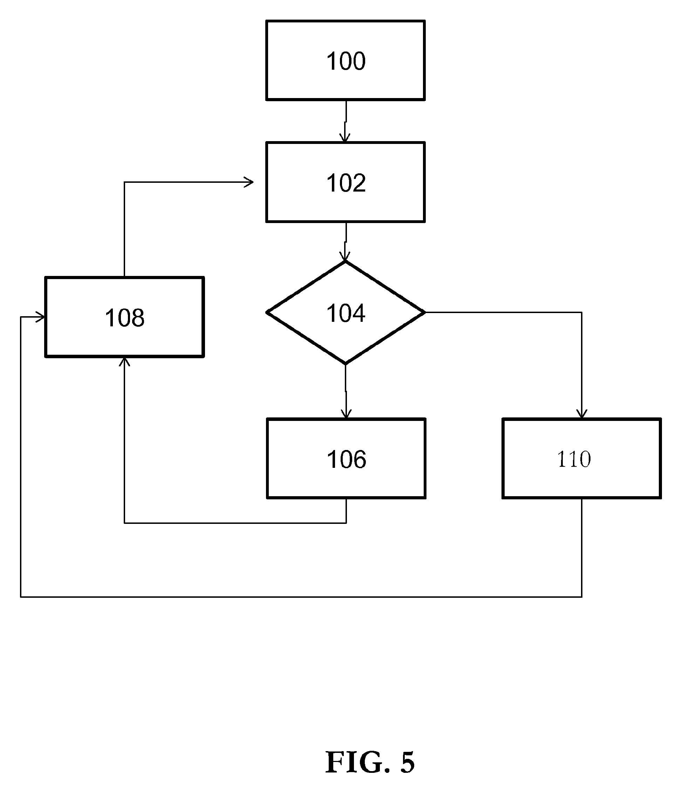

La figure 5 montre de façon schématique un procédé d'usinage pour un système d'usinage 1.

Après une étape d'initialisation 100 lors de laquelle l'unité de traitement 15 est paramétrée selon la matière des barres 5 à usiner, c'est-à-dire on charge par exemple dans une mémoire la résistivité de la nuance de matière à usiner, on mesure lors d'une étape 102 la résistivité en même temps que l'embarreur 3 transporte une barre 5 vers la machine-outil 7 à commande numérique et on compare lors d'une étape 104 la résistivité ou l'impédance mesurée à celle en mémoire dans l'unité de traitement 15.

En cas de conformité de la barre 5, celle-ci est donc usinée lors d'une étape 106 selon les programmes choisis dans la machine-outil 7 à commande numérique. Puis lors d'une étape 108, une nouvelle barre 5 est avancée par l'embarreur 3 et le cycle recommence jusqu'à épuisement des barres 5 chargées dans l'embarreur 3.

En cas de non-conformité dans les caractéristiques matières des barres à usiner, lors d'une étape 110, on commande la machine-outil à commande numérique 7 pour arrêter le processus d'usinage ou pour éliminer du processus d'usinage la barre 5 non conforme. En cas d'élimination, on passe ensuite à l'étape 108 pour charger une nouvelle barre 5 et le cycle recommence.

On comprend donc que la présente invention permet une plus grande autonomie dans l'usinage automatique tout en préservant la qualité requise et sans perte inutile de matière.

## Revendications

1. Système d'usinage (1) comprenant
- une unité (3) d'alimentation en matière première sous forme de barres (5) de matière,
- une machine-outil (7) à commande numérique alimenté en barres (5) de matière à usiner par l'unité (3) d'alimentation en matière première,
**caractérisé en ce qu'**il comprend une unité (11) de discrimination de la matière des barres (5) convoyées de l'unité d'alimentation (3) vers la machine-outil (7) à commande numérique.

2. Système d'usinage selon la revendication 1, **caractérisé en ce que** ladite unité (11) de discrimination est reliée à la machine-outil (7) à commande numérique et configurée pour signaler une non-conformité dans les caractéristiques matières des barres (5) à usiner.

3. Système d'usinage selon la revendication 1 ou 2, **caractérisé en ce que** la machine-outil (7) à commande numérique est configurée pour arrêter la production en cas d'une barre (5) présentant des caractéristiques matières non conformes.

4. Système d'usinage selon la revendication 1 ou 2, **caractérisé en ce que** la machine-outil (7) à commande numérique est configurée pour éliminer une barre (5) de la production en cas d'une barre (5) présentant des caractéristiques matières non conformes.

5. Système d'usinage selon l'une quelconque des revendications 1 à 4, **caractérisé en ce que** l'unité (11) de discrimination comprend un capteur (13) sans contact.

6. Système d'usinage selon la revendication 5, **caractérisé en ce que** le capteur (13) sans contact est un capteur à courant de Foucault.

7. Système d'usinage selon la revendication 6, caractérisé en le capteur (13) à courant de Foucault comprend un anneau (21) réalisé en matière plastique présentant un faible coefficient de friction, notamment en polytétrafluoroéthylène (PTFE), destiné à être traversé par une barre (5) à usiner, et une bobine (23) enroulée autour dudit anneau.

8. Système d'usinage selon l'une quelconque des revendications 6 à 7, **caractérisé en ce que** le capteur (13) à courant de Foucault est configuré pour déterminer l'impédance ou la résistivité des barres (5) à usiner.

9. Système d'usinage selon l'une quelconque des revendications 1 à 8, **caractérisé en ce que** l'unité d'alimentation comprend un embarreur, un robot ou un bras manipulateur.

10. Procédé d'usinage pour un système d'usinage selon l'une quelconque des revendications 1 à 8 dans lequel on détecte via une unité (11) de discrimination de la matière des barres convoyées par l'unité d'alimentation en matière première (3) vers la machine-outil (7) à commande numérique une non-conformité dans les caractéristiques matière des barres (5) à usiner et on commande la machine-outil (7) à commande numérique pour arrêter le processus d'usinage ou pour éliminer du processus d'usinage la barre non conforme.
